Europäisches Patentamt

**European Patent Office**

Office européen des brevets

(19)

(11) Veröffentlichungsnummer: **0 023 481**
**B1**

(12) **EUROPÄISCHE PATENTSCHRIFT**

(45) Veröffentlichungstag der Patentschrift:
19.01.83

(51) Int. Cl.³: **C 03 C 1/00**, C 03 B 5/225

(21) Anmeldenummer: **80890083.1**

(22) Anmeldetag: **24.07.80**

(54) **Verfahren zum Läutern von Glas.**

(30) Priorität: **31.07.79 DE 2931011**

(43) Veröffentlichungstag der Anmeldung:
**04.02.81 Patentblatt 81/5**

(45) Bekanntmachung des Hinweises auf die Patenterteilung:
**19.01.83 Patentblatt 83/3**

(84) Benannte Vertragsstaaten:
**BE FR GB IT SE**

(56) Entgegenhaltungen:
**FR-A-861 519**
**US-A-3 589 885**
**CHEMICAL ABSTRACTS, Band 91, Nr. 16, 8. Oktober 1979, Seite 281, Nr. 127853q, Columbus, Ohio, USA.**

(73) Patentinhaber: **Horina, Karl-Heinz, Dr. Ing.,
Kolpingstrasse 5, D-8372 Zwiesel (DE)**

(72) Erfinder: **Horina, Karl-Heinz, Dr. Ing., Kolpingstrasse 5,
D-8372 Zwiesel (DE)**

(74) Vertreter: **Pawloy, Heinrich, Dr. et al, Patentanwälte Dr.
Heinrich Pawloy Dipl.-Ing. Helmut Sonn Dipl.-Ing. Arnulf
Weinzinger Riemergasse 14, A-1010 Wien (AT)**

BUNDESDRUCKEREI BERLIN

## Verfahren zum Läutern von Glas

Die vorliegende Erfindung betrifft ein neues Verfahren zum Läutern von Glas, bei welchem es möglich ist, einen Abfallstoff, der bisher infolge seiner Giftigkeit auf Sondermülldeponien abgelagert werden mußte, umweltfreundlich und nutzbringend einzusetzen.

Das erfindungsgemäße neue Läuterungsverfahren ist anwendbar für glaserzeugende Betriebe, insbesondere Kristall- und Bleikristallglashersteller, die geschliffene Gläser mittels Flußsäure-Schwefelsäure-Gemischen polieren. Andere glaserzeugende Betriebe können das erfindungsgemäße Läuterungsverfahren selbstverständlich ebenfalls einsetzen, wenn sie das Rohmaterial von solchen Fabriken beziehen, bei denen es beim Polieren der geschliffenen Gläser anfällt.

Die Erfindung bringt Vorteile in zweierlei Hinsicht: Erstens ist es erfindungsgemäß erstmals möglich, den umweltbelastenden Abfallstoff »Neutralisationsschlamm«, wie er beim heute überwiegend üblichen Verfahren des Polierens von Schliffgläsern mit einem Fluorwasserstoffsäure-Schwefelsäure-Gemisch zwangsläufig anfällt, schadensfrei zu beseitigen. Der zweite Vorteil des erfindungsgemäßen Verfahrens liegt darin, daß dadurch ein Läuterungsverfahren geschaffen wird, welches einen wesentlichen technischen Fortschritt gegenüber den derzeit angewendeten Verfahren darstellt, indem es die Probleme der letzteren vermeidet.

Das Polieren von geschliffenen Artikeln aus Kristall- oder Bleikristallglas erfolgt überwiegend mittels Bädern aus Fluorwasserstoffsäure und Schwefelsäure, diese entweder getrennt zum wechselnden Eintauchen oder als Gemisch. Nicht mehr verwertbare Säurereste und Waschwässer aus der Abgasreinigung der Säurepolituranlage und vom Nachspülen der Gläser müssen in Auffangbecken oder -kessel geleitet (Zeitschrift »Sprechsaal« Coburg 1973, Nr. 10/12/15/16/17, J. C. Kausch, »Die Säurepolitur von Kristallglas«) und darin mit Calciumhydroxid neutralisiert werden. Der entstehende dünne Schlamm oder die durch Pressen eingedickten Brocken müssen gegen erhöhte Gebühren auf normalen oder teilweise sogar auf Sondermüll-Deponien abgelagert werden, da die Gehalte von wenig PbO und ca. 9% F, bezogen auf die Trockensubstanz, Grundwasserverunreinigungen befürchten lassen. Die übrigen Bestandteile sind im Mittel etwa 40% Sulfat (als $SO_3$ berechnet, aus dem Hauptanteil der Poliersäure herrührend), 41% Calciumoxid (vom Neutralisationsmittel her) und etwa 10% frühere Glasbestandteile ($PbO$, $SiO_2$, $Al_2O_3$, Alkalien usw.).

Läuterungsmittel sollen die in einer Glasschmelze zwangsläufig vorhandenen Bläschen zum Aufsteigen bringen. Deren Auftriebsgeschwindigkeit wird nämlich allein von der Temperatur der Schmelze her nicht ausreichend erhöht, da die Viskosität des Glases nicht unter 30−40 Poise (3−4 Pa s) abfällt. Daher soll das Läuterungsmittel möglichst erst bei den höchsten Temperaturen der Glasschmelze Gase entwickeln, die in Form größerer Blasen die kleineren mit emporreißen (Oldenburg Verl. Mchn. Kitaigorodski »Technologie des Glases«, Teil II, Kap. IV, Abs. 2.1, 2.2 und 2.3 »Läuterung«).

Als Läuterungsmittel sind bisher bekannt:

a) Sauerstoffabgebende Stoffkombinationen, bevorzugt Kalium- oder Natriumnitrat zusammen mit Arsentrioxid oder Antimontrioxid. Dabei entwickelt die Nitratkomponente durch ihren Zerfall zwischen 800 und 1100 K freien Sauerstoff, der vom Arsen- bzw. Antimontrioxid unter Bildung des Pentoxides aufgenommen werden soll. Bei etwa 1550 K beginnt dann das Arsen-(Antimon-)Pentoxid mit Sauerstoffabgabe unter Rückbildung zum Trioxid. Diese Sauerstoffmengen bewirken bei ihrem Aufsteigen die »chemische Glasläuterung«, insbesondere von Kristall-(Bleikristall-)Gläsern.

b) Natriumsulfat, bevorzugt eingesetzt bei Massengläsern, schmilzt bei 1157 K und reagiert mit dem Sand ab etwa 1250 K, wobei es Schwefeltrioxid abgibt. Dieses läutert zum Teil in unzersetzter Form oder spaltet sich — besonders bei hohen Temperaturen — in Schwefeldioxid und Sauerstoff, die dann ihrerseits die Läuterungsaufgaben übernehmen.

c) Bariumsulfat wird sehr selten für bariumoxidhaltige Gläser verwendet.

d) Chloride und Fluoride werden nicht als alleinige, sondern nur als zusätzliche Läuterungsmittel zu a) oder b) eingesetzt, da ihre diesbezügliche Wirkung schwächer ist und sich größere Zusätze wegen Trübung des Glases verbieten.

e) Ammoniumsalze werden wegen ihrer zu frühen Dissoziation auch nur (sehr selten) zusätzlich eingesetzt. (Springer-Verlag, Jebsen-Marwedel »Glastechnische Fabrikationsfehler«, Kap. IV, Abs. 4.2 »Chemische Läuterung«). (HVG = Hüttentechn. Vereinigung d. Deutschen Glasindustrie Frankfurt 1, Mendelssohnstr. 70, HVG-Kursberichte, Heft 1962, Seite 14 − 17 und Heft 1975, Vortrag VI, Kap. 3.2 »Chemische Läuterung«).

(HVG − Frankfurt, Glashüttenhandbuch, Kap. F 40, Wickert »Läuterungsmittel«).

Die bekannten Verfahren weisen folgende Nachteile auf:

Auf die produzierte Menge von durch Schliff veredeltem Glas entfällt ein Anteil von ca. 1,5 bis 4% teilentwässerten Schlammes oder ca. 1 bis 2,5% Trocken-Material. Dieser Abfall muß derzeit in ersterem Falle in Kesselwagen oder in gepreßter Form in Plastiksäcken zu Müll- oder teilweise sogar zu Sondermülldeponien abtransportiert werden.

Die derzeit bekannten Läuterungsmittel zeigen alle bestimmte Schwächen:

2

a) Die Kombination Alkalinitrat + Arsen(Antimon)-Trioxid verlangt wegen der zu frühen Sauerstoffabgabe des ersteren eine erhebliche Überdosierung davon, damit noch ausreichend $O_2$ an das Trioxid »übergeben« werden kann. Die beiden letztgenannten sind von außerordentlicher bzw. hoher Giftigkeit. Außerdem macht Arsentrioxid das Glas empfindlich gegen Sonnenlicht (Gelbwerden) und Antimontrioxid zeigt etwas langsamere Läuterung und eine verminderte »chemische Entfärbung« des Glases (Akad. Verlagsgesellsch. Leipzig, R. Schmidt »Die Rohstoffe zur Glaserzeugung« 1958, S. 393, »Antimonoxid«).

b) Natriumsulfat kann nach dem Schmelzen hochsteigen und auf dem Glasbad schwimmend »Galle« bilden, die den Schmelzverlauf in vieler Hinsicht sehr stört. Ebenso störend, zumindest bei der Hafenglasschmelze mit ihrer nur kleinen freien Glasoberfläche ist die Schaumbildung, verursacht durch die um etwa 200 K zu frühe Gasentwicklung bei gleichzeitiger Herabsetzung der Oberflächenspannung der Schmelze. Ein weiterer, theoretisch zwar nicht ganz geklärter, praktisch jedoch immer wieder beobachteter Nachteil des Natriumsulfats ist der leichte Grünstich der damit geläuterten Gläser. Wahrscheinlich spielt auch dabei die zu frühe Gasabgabe eine Rolle, bei der die weitere Zerlegung des Schwefeltrioxids in Schwefeldioxid und Sauerstoff zu langsam verläuft und daher von letzterem nicht genügend in der Schmelze vorliegt, um die »chemische Entfärbung« (Oxidation des blaugrünen FeO zum gelben $Fe_2O_3$) vollständig ablaufen zu lassen. Gerade für die Läuterung von Kristall- und Bleikristallgläsern konnte sich Natriumsulfat daher bisher nicht durchsetzen.

c) Bariumsulfat kann nur für Gläser eingesetzt werden, die auch von der Zusammensetzung her bariumoxidhaltig sind. Außerdem verhält sich Bariumsulfat als relativ schwer einschmelzend.

d) und e) Chloride, Fluoride und Ammonsalze sind als alleinige Läuterungsmittel zu schwach in ihrer Wirkung.

Der Erfindung liegt die Aufgabe zugrunde, das störende und umweltbelastende Abfallprodukt »Neutralisationsschlamm aus der Säurepolitur von Gläsern« in eine Form überzuführen, die es als Läuterungsmittel für Glas mit technischen Vorteilen gegenüber den bisher verwendeten einsetzen läßt.

Diese Aufgabe wird erfindungsgemäß dadurch gelöst, daß man der Glasschmelze anstelle aller oder des größten Teiles der bisher verwendeten Läuterungsmittel aufbereiteten Neutralisationsschlamm aus der Säurepolitur von Glas zusetzt. Dieser enthält analysengemäß 30 bis 50% der Trockenmasse CaO, 6 bis 12% Fluorid, 30 bis 50% $SO_3$ und Restbestandteile aus dem polierten Glas.

Weitere Ausgestaltungen des erfindungsgemäßen Verfahrens sind aus den Unteransprüchen zu ersehen.

Dabei werden folgende Vorteile erzielt: Der störende Abfallstoff »Neutralisationsschlamm« wird restlos oder weitgehend aufgebracht. Dadurch entfällt zum einen die Beseitigung einer merklichen Menge an Müll, zum anderen wird der kritische (giftige) Anteil dieses Mülls, das Fluorid, zum allergrößten Teil in einer stabilen Form ins Glas eingebaut. Der letztlich noch in die Atmosphäre gelangende Teil ist demgegenüber minimal (geschätzt 1/12 bis 1/10 von im Mittel 9% Fluorid im Trockenschlamm, also noch nicht einmal 1% des Materials, das wiederum mit 1 bis 2% dem Glas zugesetzt werden kann. Diese äußerst geringen Schadstoffmengen liegen also bei weitem unter denjenigen, die z. B. bei der Produktion von Massengläsern, wie Tafel-, Spiegel- oder Flaschenglas, mit ihren erheblichen Gemengeanteilen von Calciumfluorid (Flußspat) und (oder) Natriumaluminiumfluorid (Kryolith), freiwerden. Das erfindungsgemäße Material stellt in seiner Kombination von überwiegend Calciumsulfat mit wenig Calciumfluorid neben Glas-Restanteilen ein vorteilhaftes Läuterungsmittel dar: Gegenüber der Läuterungsmittelkombination Alkalinitrat-Arsen(Antimon)trioxid erlaubt es das völlige Weglassen des ersteren Anteiles und eine Reduzierung des besonders durch seine Giftigkeit problematischen letzteren Anteiles auf etwa ein Drittel der bisher üblichen Menge (0,15 bis 0,2 gegenüber bisher 0,5 bis 0,6%, bezogen auf das fertige Glas). Gegenüber Natriumsulfat lassen sich die Vorteile durch Vergleich der Eigenschaften zwischen diesem und Calciumsulfat deutlich machen: So spaltet sich das letztere thermisch um fast 200 K höher, also bei der günstigsten Glastemperatur (ab 1700 K). Die dabei gebildeten Blasen sind sauerstoffreicher, da die Zerlegung des Schwefeltrioxids in Schwefeldioxid und Sauerstoff bei hohen Temperaturen rascher verläuft. Dadurch wiederum ist die der Läuterung nebenhergehende »chemische Entfärbung« (Oxidation des blaugrünen FeO zum gelben $Fe_2O_3$) beim Calciumsulfat einwandfrei. Ferner kann bei Calciumsulfat auch keine Galle auftreten, da dieses erst bei 1670 K schmilzt und auch eine wesentlich höhere Reindichte aufweist (2,96 gegenüber 2,70). Spezifische Wärmen (99,6 gegenüber 127,7 J/Mol.K) und Schmelzwärmen (28,0 gegenüber 28,7 J/Mol) begünstigen ebenfalls das Calciumsulfat gegenüber dem Natriumsulfat (Lit.: D'Ans-Lax, Taschenbuch für Chemiker). Schließlich tritt bei der Verwendung von Calciumsulfat kein Schaum auf, da die Gasabgabe bei höherer Temperatur und damit geringerer Viskosität der Schmelze stattfindet. Alle genannten Vorteile (gegenüber dem Natriumsulfat) gelten gleichermaßen für Calciumsulfat wie für das erfindungsgemäße Material. Die bei den bisherigen Läuterungsmitteln Natriumsulfat bzw. Salpeter vorhandene Flußmittelwirkung wird beim erfindungsgemäßen Material zum Teil durch den Anteil an Calciumfluorid übernommen. Außerdem wird ja, um die Endzusammensetzung des Glases gleichzuhalten, bei Anwendung vorliegender Erfindung ohnehin der Anteil an Kalium- bzw. Natriumkarbonat erhöht und der an Kalkstein reduziert.

Der Reinheitsgrad des erfindungsgemäßen Neutralisationsschlammes wird durch die relativ geringe Zusatzmenge im Normalfall ausreichen, d. h., daß der Anteil an färbenden Metalloxiden (der z. Z. etwa unter 0,1% liegt) nicht stört. Es wäre jedoch selbst im Falle höherer Ansprüche möglich, die Erfindung in Anspruch zu nehmen, da die Qualität des Neutralisationsschlammes weitgehend durch die Behandlung des Abfalls in den Neutralisationsbecken und durch Verwendung eines reineren Calciumhydroxids gesteigert werden kann.

Ausführungsbeispiel

Der Neutralisationsschlamm wird in der Glasfabrik durch Filterpressen von dem größeren Teil des Wassers befreit — was häufig zum Zwecke der bequemeren Abfallbeseitigung bereits geschieht. Das feuchte Material (die Wassergehalte liegen zwischen 30 und 40%) wird dann, möglichst unter Verwendung bisher ungenutzter Abwärme, getrocknet. Da die dabei zu bewältigenden Mengen, bezogen auf den sonstigen Materialumsatz einer Glashütte, sehr klein sind, stellt die Anschaffung oder der Selbstbau einer solchen Trockenvorrichtung keine wirtschaftlichen oder technischen Probleme dar. Das getrocknete Material wird anschließend oder zugleich mit der Trocknung vermahlen, wobei die Mahlfeinheit nicht unter die natürliche Körnung des Glassandes zu gehen braucht (Korngrößen von bis zu 0,4 mm haben sich als einwandfrei verwendbar erwiesen). Wichtig ist, daß die Mahlwerkzeuge nichtmetallisch sind (Korund, Mullit o. ä.). Auch hier kann die Zerkleinerungsvorrichtung im Vergleich zu anderen Maschinen der Glasfabrik sehr klein gehalten werden. Für die als Beispiele aufgeführten Glasgemengesätze wird eine mittlere analytische Zusammensetzung des wasserfreien Materials von 41% $CaO$, 40% $SO_3$, 9% F und 10% restliche Glasbestandteile ($K_2O$, $Na_2O$, $PbO$, $BaO$, $SiO_2$ u. a.) angenommen. Dabei ist Calciumoxid zum größeren Teil an $SO_3$ (als $CaSO_4$), zum kleineren an F (als $CaF_2$) gebunden. Dies hätte bei totaler Trocknung eine mineralogische Zusammensetzung von 19,3% $CaF_2$, 70,3% $CaSO_4$ und 10,4% Glasreste zur Folge. Da aber die Trocknung in der Regel bei Temperaturen unter 403 K vorgenommen werden wird, was für die vorliegende Erfindung auch durchaus ausreicht, kann man davon ausgehen, daß dann pro Molekül $CaSO_4$ noch 2 Moleküle Wasser im Material verbleiben (Calciumsulfat-Dihydrat), während Calciumfluorid kein Wasser festhält. Dann würde sich die mineralogische Zusammensetzung mit 16,1% $CaF_2$, 75,1% $CaSO_4 \cdot 2 H_2O$ und 8,8% Glasreste einstellen. Von dieser mittleren Zusammensetzung des erfindungsgemäßen Materials ausgehend, ergeben sich (bei Vernachlässigung des letztgenannten, nur die Glasmenge, aber nicht die Glaszusammensetzung verändernden Anteiles) als »Glasfaktoren« für die Aufstellung der Gemengesätze: 0,26 $CaO$, 0,135 $CaF_2$ und 0,09 $SO_3$ (dabei wurde aus Erfahrungswerten ein Verlust von etwa 75% beim $SO_3$ und ein solcher von 9% beim F angenommen).

1.) Herstellung (mit erfindungsgemäßer Läuterung) eines Kristallglases (bleifrei) mittels Hafenofenschmelze (Gemengesatz und resultierende Zusammensetzung):

| | | | |
|---|---|---|---|
| 75 kg | Quarzsand | 73,42% | $SiO_2$ |
| 9 kg | Kalkstein | 5,21% | $CaO$ |
| 6 kg | Bariumkarbonat | 0,18% | $CaF_2$ |
| 15 kg | Pottasche calc. | 9,81% | $K_2O$ |
| 9 kg | Soda calc. schwer | 5,53% | $Na_2O$ |
| 1,5 kg | Borax calc. | 0,96% | $B_2O_3$ |
| 0,2 kg | Antimontrioxid | 0,19% | $Sb_2O_3$ |
| 1,4 kg | erfindungsgemäßes Material | 4,57% | $BaO$ |
| | | 0,13% | $SO_3$ |

2.) Herstellung (mit erfindungsgemäßer Läuterung) eines Bleikristallglases (24%) mittels Hafenofenschmelze (Gemengesatz und resultierende Glaszusammensetzung):

| | | | |
|---|---|---|---|
| 100 kg | Quarzsand | 59,26% | $SiO_2$ |
| 43 kg | Mennige rein | 24,94% | $PbO$ |
| 23 kg | Pottasche calc. | 9,11% | $K_2O$ |
| 15 kg | Soda calc. schwer | 5,15% | $Na_2O$ |
| 3 kg | Kalkstein | 1,24% | $CaO$ |
| 0,2 kg | Arsentrioxid | 0,08% | $As_2O_3$ |
| 1,7 kg | erfindungsgemäßes Material | 0,13% | $CaF_2$ |
| | | 0,09% | $SO_3$ |

In beiden genannten Ausführungsbeispielen kann bei Bedarf (höherem Anfall) zusätzlich Neutralisationsschlamm eingesetzt werden, wobei im Austausch jeweils die halbe Menge von Kalkstein wegzulassen ist.

3.) Herstellung eines maschinell geformten Kristallglases (bleifrei) in einem Glaswannenofen

4

(berechnet für einen 1-Tonnen-Mischer) (Gemengesatz und resultierende Glaszusammensetzung):

| 590 kg | Quarzsand | 70,05% | $SiO_2$ |
| 13 kg | Tonerdehydrat | 1,02% | $Al_2O_3$ |
| 12 kg | Borax calc. | 0,93% | $B_2O_3$ |
| 170 kg | Soda calc. leicht | 11,55% | $Na_2O$ |
| 50 kg | Pottasche calc. | 3,97% | $K_2O$ |
| 70 kg | Bariumkarbonat | 6,47% | BaO |
| 65 kg | Kalkstein | 5,37% | CaO |
| 17 kg | erfindungsgemäßes Material | 0,26% | $CaF_2$ |
| 13 kg | Alabastergips | 0,38% | $SO_3$ |

4.) Herstellung eines Flachglases (Tafel- oder Spiegelglas) mit einem maximalen Anteil an erfindungsgemäß eingesetztem Material, wie er sich nur in einer Wannenofenschmelze verarbeiten läßt. Dazu theoretisch resultierende Glaszusammensetzung (Gemengesatz berechnet für einen 1000-kg-Mischer):

| 540 kg | Quarzsand trocken | 70,62% | $SiO_2$ |
| 40 kg | Feldspat (orthoklasreich) | 1,01% | $Al_2O_3$ |
| 200 kg | Soda calc. leicht | 13,94% | $Na_2O$ |
| 30 kg | Kalkstein | 0,52% | $K_2O$ |
| 130 kg | Dolomit | 8,91% | CaO |
| 60 kg | erfindungsgemäß eingesetztes Material | 3,35% | MgO |
| | | 0,97% | $CaF_2$ |
| | | 0,68% | $SO_3$ |

5.) Herstellung eines blei-, barium- und arsenfreien Kristallglases mit relativ geringem, aber gerade noch für die alleinige Läuterung ausreichendem Anteil an erfindungsgemäß eingesetztem Material (Gemengesatz berechnet auf 100 kg Sand):

| 100 kg | Quarzsand trocken | 77,40% | $SiO_2$ |
| 21 kg | Pottasche calc. | 10,86% | $K_2O$ |
| 8,5 kg | Soda calc. schwer | 3,81% | $Na_2O$ |
| 17 kg | Kalkstein | 7,62% | CaO |
| 1,8 kg | erfindungsgemäß eingesetztes Material | 0,18% | $CaF_2$ |
| | | 0,13% | $SO_3$ |

**Patentansprüche**

1. Verfahren zum Läutern von Glas, dadurch gekennzeichnet, daß man der Glasschmelze Neutralisationsschlamm aus der Säurepolitur von geschliffenen Gläsern, enthaltend 30 bis 50% CaO, 30 bis 50% $SO_3$, 6 bis 12% Fluorid, jeweils bezogen auf die Trockenmasse, Rest übliche Glasbestandteile, zusetzt.

2. Verfahren nach Anspruch 1, dadurch gekennzeichnet, daß für Hafenglasofenschmelzen der Neutralisationsschlamm in einer Menge von 1 bis 2,5% als Läuterungsmittel allein oder zusammen mit 0,1 bis 0,2% $As_2O_3$ oder $Sb_2O_3$ oder zusammen mit 0,5 bis 1% eisenarmem Gips, jeweils bezogen auf das fertige Glas, zugesetzt wird.

3. Verfahren nach Anspruch 1, dadurch gekennzeichnet, daß für Wannenglasofenschmelzen der Neutralisationsschlamm in einer Menge von 1 bis 3% als Läuterungsmittel allein oder zusammen mit 0,5 bis 2% eisenarmem Gips, jeweils bezogen auf das fertige Glas, eingesetzt wird.

**Claims**

1. A process for refining glass, characterized in that neutralization sludge from the acid polish of cut glass containing 30 to 50% of CaO, 30 to 50% of $SO_3$, 6 to 12% of fluoride, each based on the dry mass, remainder usual glass components, is added to the glass melt.

2. The process of claim 1, characterized in that for melts of pot glass melting furnaces the neutralization sludge is added in an amount of 1 to 2,5% as refining agent alone or together with 0,1 to 0,2% of $As_2O_3$ or $Sb_2O_3$ or together with 0,5 to 1% of iron-poor gypsum, each referred on the finished glass.

3. The process of claim 1, characterized in that for melts of tank glass furnaces the neutralization sludge is used in an amount of 1 to 3% as refining agent alone or together with 0,5 to 2% of iron-poor gypsum, each referred on the ready glass.

**Revendications**

1. Procédé pour l'affinage du verre, caractérisé en ce qu'on ajoute à la fusion du verre de la boue provenant de la neutralisation de l'acide de polissage des verres taillés contenant 30 à 50% de CaO, 30 à 50% de $SO_3$, 6 à 12% de fluorore et pour le reste des composants usuels de verre, qui proviennent du verre poli, calculé sur la masse sèche.

2. Procédé selon revendication 1, caractérisé en ce que pour le procédé de la fusion du verre dans le four à pots on ajoute la boue de neutralisation à raison de 1 à 2,5% comme agent d'affinage unique ou ensemble avec 0,1 à 0,2% de l'$As_2O_3$ ou du $Sb_2O_3$ ou avec 0,5 à 1% du plâtre d'une teneur trés basse de fer, calculé dans tous le cas sur le verre fini.

3. Procédé selon revendication 1, caractérisé en ce que pour le procédé de la fusion du verre dans le four à bassin on ajoute la boue de neutralisation à raison de 1 à 3% comme agent d'affinage unique ou avec 0,5 à 2% du plâtre d'une teneur très basse de fer, calculé sur le verre fini.